# EUROPÄISCHE PATENTSCHRIFT

(11) **EP 1 970 783 B1**
(45) Veröffentlichungstag und Bekanntmachung des Hinweises auf die Patenterteilung: **05.11.2014**
(21) Anmeldenummer: 08004863.0
(22) Anmeldetag: 14.03.2008
(51) Int. Cl.: G05B 19/05, G05B 19/418

(54) **Verfahren, Steuergerät und Steuerungssystem zur Steuerung eines Automatisierungssystem**
Method, control system and device for controlling an automatization system
Procédé, appareil de commande et système de commande destinés à la commande d'un système d'automatisation

(30) Priorität: 14.03.2007 DE 102007013085
(43) Veröffentlichungstag der Anmeldung: 17.09.2008
(73) Patentinhaber: Phoenix Contact GmbH & Co. KG, 32825 Blomberg (DE)
(72) Erfinder: Kalhoff, Johannes, 32825 Blomberg (DE); Krumsiek, Dietmar, 31860 Emmerthal (DE)
(74) Vertreter: Blumbach Zinngrebe

(56) Entgegenhaltungen:
- EP-A1- 1 276 026
- EP-A2- 1 659 468
- EP-A2- 1 710 639
- WO-A1-01/50284
- US-A1- 2006 155 387
- LUMPP T ET AL: "Virtual Java devices. Integration of fieldbus based systems in the Internet" INDUSTRIAL ELECTRONICS SOCIETY, 1998. IECON '98. PROCEEDINGS OF THE 24 TH ANNUAL CONFERENCE OF THE IEEE AACHEN, GERMANY 31 AUG.-4 SEPT. 1998, NEW YORK, NY, USA,IEEE, US, Bd. 1, 31. August 1998 (1998-08-31), Seiten 176-181, XP010308211 ISBN: 978-0-7803-4503-4

## Beschreibung

In der Automatisierungstechnik werden Systeme und Geräte heute typischerweise durch spezielle Projektierungssysteme konfiguriert und/oder programmiert. Dementsprechend werden in der Regel spezielle Softwarepakete eingesetzt, die für bestimmte Typen von Automatisierungssystemen nutzbar sind. Typischerweise werden Software-Tools für die Steuerungsprogrammierung, zum Beispiel die Programmierung einer Maschinen-Applikation, die Netzwerkkonfiguration oder die Gerätekonfiguration angeboten.

Für die Steuerungsprogrammierung ist beispielsweise der Standard IEC 61131 bekannt, für die Gerätekonfiguration werden beispielsweise das FDT/DTM-Konzept (Field-Device-Tool/ Device-Type-Manager) oder Web-basierte Seiten eingesetzt. Weiterhin wird versucht, Interoperabilität durch vereinheitlichende Schnittstellen, wie zum Beispiel durch Gerätedefinitionen für Netzwerkkomponenten, zu erhalten.

Nachteilig an derzeitigen Lösungen ist jedoch, dass eine Vielzahl von Komponenten benötigt werden, die auf einen Rechner installiert werden müssen, wobei sich die Benutzeroberflächen mit der jeweiligen Gerätefunktion erweitern und der Anwender dementsprechend jeweils die richtige Version der Benutzeroberfläche verwenden muss. Weiterhin ist die Verfügbarkeit der Benutzeroberfläche im gesamten Lebenszyklus aufgrund von Versionsunterschieden bei Gerätetausch, Inbetriebnahme, Service, etc., häufig problematisch. Diese Problematik wird zusätzlich durch die Nutzbarkeit älterer Benutzeroberflächen auf neueren Rechnersystemen verstärkt.

Im Dokument US2006/0155387 wird eine Architektur für ein Steuerungssystem beschrieben, bestehend aus miteinander über ein Netzwerk verbundenen Steuergeräten. Die Steuergeräte weisen jeweils einen Satz von Software-Objekten auf, die unterschiedliche Typen von Gerätefunktionen implementieren sowie jeweils ein Softwareanwendungsprogramm aufweisen. Es wird weiterhin eine Art von Ablaufumgebung ("Tool Device") beschrieben, die zum Überwachen, Warten, und Entwickeln der Softwareanwendungsprogramme der Steuergeräte verwendet wird und Proxy-Anwendungsprogramme sowie Proxy-Software-Objekten enthält, die zu den Software-Objekten und den Softwareanwendungsprogrammen in den Steuergeräten identisch und zugeordnet sind und mit denen sowie untereinander kommunizieren. Es wird weiterhin ein "off-line"-Modus offenbart, der bei einer fehlenden Netzwerkverbindung angewendet werden kann, bei dem die Ausführung der Softwareanwendungsprogramme lediglich über die Stellvertreterfunktionen (Proxy-Instanzen) in der Ablaufumgebung "Tool Device" erfolgt.

Der vorliegenden Erfindung liegt daher die Aufgabe zugrunde, einen verbesserten Weg aufzuzeigen, wie zur Steuerung eines Automatisierungssystems Gerätefunktionen der verwendeten Steuergeräte projektiert, erstellt, bearbeitet und/oder simuliert werden können.

Diese Aufgabe wird durch ein Verfahren gemäß Anspruch 1, sowie durch ein Steuergerät nach Anspruch 11 gelöst. Vorteilhafte Ausführungsformen und Weiterbildungen sind Gegenstand der jeweiligen Unteransprüche.

Dementsprechend dient ein erfindungsgemäßes Verfahren zur Steuerung eines Automatisierungssystems, wobei zur Steuerung ein Steuerungssystem mit, in der Regel einer Vielzahl, miteinander verbundener Steuergeräte eingesetzt wird, und wobei in wenigstens einem Steuergerät ein Steuerprogramm mit einer vorgegebenen Gerätefunktion gespeichert ist. Das Verfahren sieht vor, dass wenigstens ein Software-Modul innerhalb einer Ablaufumgebung mit einer innerhalb der Ablaufumgebung ausführbaren Programmfunktion bereitgestellt wird, wobei die Programmfunktion eine Stellvertreterfunktion der in dem Steuergerät hinterlegten Gerätefunktion ist, die Gerätefunktion und die Programmfunktion zumindest teilweise identisch sind, und die Gerätefunktion wenigstens einen ersten variablen Funktionsparameter und die Programmfunktion wenigstens einen zweiten, dem ersten Funktionsparameter der Gerätefunktion zugeordneten, variablen Funktionsparameter umfasst. Ferner sieht das Verfahren vor, dass der zweite Funktionsparameter in Abhängigkeit von Benutzereingaben angepasst wird, wobei die Benutzereingaben durch eine Benutzerschnittstelle der Ablaufumgebung bereitgestellt werden, dass der angepasste zweite Funktionsparameter von der Ablaufumgebung zu dem wenigstens einen Steuergerät über ein Netzwerk übertragen wird, dass der erste Funktionsparameter auf den Wert des zweiten Funktionsparameters eingestellt wird, und dass die Stellvertreterfunktion der Gerätefunktion zugeordnet wird, wobei die Gerätefunktion durch die Stellvertreterfunktion erweitert wird oder Teile der Gerätefunktion zur Stellvertreterfunktion verlagert werden, derart, dass die Gerätefunktion teilweise in dem Gerät und teilweise innerhalb der Ablaufumgebung mittels der Stellvertreterfunktion ausgeführt wird, so dass die Gerätefunktion durch die Stellvertreterfunktion ergänzt wird.

In der vorliegenden Patentanmeldung wird der Begriff Steuergerät für jegliches Gerät verwendet, welches an der Steuerung eines Prozesses eines Automatisierungssystems beteiligt ist. Dementsprechend bezeichnet der Begriff Steuergerät beispielsweise einen Sensor, einen Aktor, ein Gerät zur Ein- oder Ausgabe von Prozess-, Parameter- oder Steuerdaten, oder ein Gerät zum Steuern, Überwachen, Protokollieren, Bedienen und/oder Beobachten eines Prozesses. Für ein solches Steuergerät wird im Folgenden auch einfach der Begriff Gerät verwendet.

Die im Steuergerät hinterlegte Gerätefunktion und/oder die Stellvertreterfunktion können Komponenten für den gesamten Lebenszyklus des Gerätes, wie beispielsweise Engineering-, Funktions-, Diagnose- und/oder Service-Komponenten, umfassen. Typischerweise sind Geräte- und Stellvertreterfunktion als Softwarekomponenten ausgebildet, wobei die Gerätefunktion durch das entsprechende Steuergerät und die Stellvertreterfunktion innerhalb der Ablaufumgebung ausführbar sind. Das Verfahren ermöglicht somit über die außerhalb des Gerätes ablaufende Stellvertreterfunktion den Zugriff des Benutzers auf die Gerätefunktion über den gesamten Lebenszyklus. Vorteilhaft wird die Funktionalität der Gerätefunktion durch die Stellvertreterfunktion erweitert, beispielsweise um Funktionalitäten zur Visualisierung von Prozesszuständen oder zur Benutzereingabe.

Über die Stellvertreterfunktion kann vorteilhaft auch der aktuelle Zustand der zugeordneten Gerätefunktion abgefragt werden. Dementsprechend umfasst das Verfahren vorteilhaft die Schritte des Übertragen des ersten Funktionsparameters von dem wenigstens einen Steuergerät zu der Ablaufumgebung über das Netzwerk und des Einstellen des zweiten Funktionsparameters auf den Wert des ersten Funktionsparameters.

Als Netzwerk wird vorzugsweise ein IP-basiertes Netzwerk, insbesondere das Internet, eingesetzt. Die Ablaufumgebung ist vorzugsweise als Web-Browser ausgebildet oder umfasst diesen. Das Übertragen des ersten und/oder zweiten Funktionsparameters erfolgt in dieser Ausführungsform des Verfahrens bevorzugt mittels Standard-Webtechnologien, insbesondere mittels AJAX (Asynchronous JavaScript and XML). Zu diesem Zweck verfügt das Steuergerät vorzugsweise über entsprechende Serverfunktionalitäten.

Die Ablaufumgebung, innerhalb der die Stellvertreterfunktion ausgeführt wird, kann vorzugsweise in einem von dem Steuerungssystem separaten Rechnersystem oder aber auch in einem weiteren Steuergerät angeordnet sein.

Die Stellvertreterfunktion, im Folgenden auch als Funktions-Proxy oder Klon-Funktion bezeichnet, und die Gerätefunktion weisen vorzugsweise eine zumindest teilweise identische Schnittstelle zur Datenkommunikation auf. Auf diese Weise kann die Stellvertreterfunktion mit anderen Stellvertreter- und/oder Gerätefunktionen kommunizieren und somit eine Simulation des Steuerungssystems ermöglichen. Dementsprechend umfasst das Verfahren vorteilhaft den Schritt des Simulierens eines funktionalen Ablaufes des Steuerungssystems innerhalb der Ablaufumgebung, wobei das Simulieren eines funktionalen Ablaufes vorzugsweise das Ausführen wenigstens einer Programmfunktion umfasst, wobei die Programmfunktion eine Stellvertreterfunktion einer in einem Steuergerät des Steuerungssystems hinterlegten Gerätefunktion ist.

Das Simulieren eines funktionalen Ablaufes umfasst vorteilhaft das Austauschen von Daten zwischen wenigstens zwei Programmfunktionen, wobei die Programmfunktionen jeweils Stellvertreterfunktionen von in wenigstens zwei zugeordneten Steuergeräten hinterlegten Gerätefunktionen sind.

Ferner umfasst das Simulieren eines funktionalen Ablaufes vorzugsweise das Ausführen wenigstens einer in einem Steuergerät des Steuerungssystems hinterlegten Gerätefunktion, wobei Eingabewerte der Gerätefunktion von der Ablaufumgebung zu dem Steuergerät über das Netzwerk übertragen werden, und Ausgabewerte der Gerätefunktion von dem Steuergerät zu der Ablaufumgebung über das Netzwerk übertragen werden.

Das Bereitstellen der Stellvertreterfunktion innerhalb der Ablaufumgebung beziehungsweise das Bereitstellen des Software-Moduls, welches die Stellvertreterfunktion umfasst, kann je nach Einsatzzweck auf unterschiedliche Weise erfolgen. So kann die Stellvertreterfunktion im Steuergerät hinterlegt sein und aus diesem direkt ausgelesen werden. Die Stellvertreterfunktion kann auch über eine vom Hersteller des Steuergerätes oder von einem Drittanbieter bereitgestellte Internetadresse aus dem Internet abgerufen werden. Zu diesem Zweck kann vorteilhaft im Steuergerät eine entsprechende Internetadresse hinterlegt sein.

Ferner kann die Stellvertreterfunktion oder eine Softwarekomponente, welche die Stellvertreterfunktion umfasst, über bereitgestellte Speichermedien, wie beispielsweise eine CD oder eine Diskette, oder als Ergebnis eines Konfigutrationsprozesses, auch als Tooling bezeichnet, bereitgestellt werden.

Ein erfindungsgemäßes Steuergerät eines Steuerungssystems zur Steuerung eines Automatisierungssystems umfasst einen Speicher mit einem darin gespeicherten ersten Programm-Modul, wobei das erste Programm-Modul wenigstens eine ausführbare Gerätefunktion mit wenigstens einem ersten variablen Funktionsparameter umfasst, eine Prozessor-Einheit zur Ausführung des ersten Programm-Moduls, und eine Netzwerk-Schnittstelle zum Verbinden des Steuergerätes mit einem Netzwerk, wobei das erste Programm-Modul dazu ausgebildet ist, über eine Software-Schnittstelle mit wenigstens einem zweiten Programm-Modul zu kommunizieren, das zweite Programm-Modul in einem mit dem Steuergerät über das Netzwerk verbindbaren Rechnersystem angeordnet ist und wenigstens eine Programmfunktion mit wenigstens einem zweiten variablen Funktionsparameter umfasst, und die Programmfunktion eine Stellvertreterfunktion der in dem Steuergerät hinterlegten Gerätefunktion ist, wobei die Gerätefunktion und die Programmfunktion zumindest teilweise identisch sind.

Zur Steuerung der Gerätefunktion über die Stellvertreter-funktion ist das Steuergerät vorzugsweise dazu ausgebildet, den ersten variablen Funktionsparameter auf einen über das Netzwerk empfangenen Wert einzustellen und/oder den ersten variablen Funktionsparameter aus der Gerätefunktion auszulesen und über das Netzwerk an das zweite Programm-Modul zu übertragen.

Wie bereits oben beschrieben, kann das Steuergerät jedes Gerät sein, welches an der Steuerung eines Prozesses eines Automatisierungssystems beteiligt ist. In einer bevorzugten Ausführungsform ist das Steuergerät als ein Eingangs- oder Ausgangsgerät zur Prozesssteuerung ausgebildet, wobei das Steuergerät vorzugsweise dazu ausgebildet ist, die Gerätefunktion derart auszuführen, dass Ein- und Ausgabewerte der Gerätefunktion über das Netzwerk mit dem zweiten Programm-Modul ausgetauscht werden.

Vorzugsweise ist das Steuergerät als programmierbare logische Kontrolleinheit (PLC) ausgebildet, um die entsprechenden Funktionen mittels entsprechend hinterlegter Softwarekomponenten auszuführen. Das Netzwerk ist, wie bereits oben beschrieben, vorzugsweise ein IP-basiertes Netzwerk, insbesondere das Internet.

Durch den Einsatz erfindungsgemäßer Steuergeräte zur Steuerung eines Automatisierungssystems lassen sich alle Engineering-, Steuerungs-, Überwachungs- und Diagnosefunktionen des Automatisierungssystems über den Zugriff auf die entsprechenden Gerätefunktionen mittels der jeweils zugeordneten Stellvertreterfunktionen realisieren, wodurch ein hohes Maß an Flexibilität erreicht wird.

Durch die Erfindung wird besonders vorteilhaft ein System bereitgestellt, dass die erforderlichen Engineering-, Funktions-, Diagnose- und Service-Komponenten, als Teil der Gerätefunktion zur Verfügung stellt, d.h. die vollständige Gerätefunktion für den gesamten Lebenszyklus bereitstellt. Dies kann vorteilhaft teilweise durch Bereitstellen von Stellvertreterfunktionen durch den jeweiligen Hersteller, beispielsweise über eine von diesem bereitgestellte Webseite oder Software-Tools, erfolgen, wobei es sich bei der Stellvertreterfunktion um einen Klon der Gerätefunktion mit gegebenenfalls erweiterter Funktionalität handelt. Die Nutzung wird über eine Ablaufumgebung, zum Beispiel einen Web-Browser, ermöglicht.

Das erfindungsgemäße Konzept lässt sich gleichermaßen für bedienbare als auch für automatische Funktionen anwenden, wobei die Verbindung zwischen den Funktionen durch Web-Mechanismen hergestellt wird.

In einer bevorzugten Ausführungsform wird eine Kopie der Gerätefunktion als Klon-Funktion auf der Ablaufumgebung des Benutzers gespeichert und genutzt. Die Ergebnisse eines Lebenszyklus-Schrittes, wie zum Beispiel die Parametrierung einer im Rahmen des Engineering oder der Simulation verwendeten Funktion, wird in der Klon-Funktion gehalten.

Die Klon-Funktion läuft in einer Ablaufumgebung in der gewünschten Einstellung und kann so mit anderen Geräten oder Klonen von Funktionen "real" zusammen arbeiten. Klon-Funktionen können mit den entsprechenden Originalgeräten abgeglichen werden, so dass die Geräte ihre Gerätefunktionen oder Teile der Gerätefunktionen anhand der Parametrierung der Klon-Funktionen ausführen. Die gespeicherte Klon-Funktion kann mit Kontakt zum Gerät mit dem Gerät abgeglichen werden. Diese Funktion kann auch automatisch durch Markerung des Gerätes oder manuell durch Auswahl des Gerätes durch einen Nutzer erfolgen.

In den verschiedenen Phasen im Lebenszyklus eines Gerätes kommen typischerweise verschiedene Beschreibungsmittel der Gerätefunktionen und Geräteparameter zum Einsatz. In bestimmten Phasen, wie beispielsweise in der Phase der Spezifikation von Prozessbedingungen an einem Messort, die von einem als Sensor ausgebildeten Steuergerät gemessen werden sollen, oder in der Phase der Simulation des Prozessablaufes, liegt das entsprechende Gerät physikalisch noch gar nicht vor. Durch das erfindungsgemäße Bereitstellen von Stellvertreterfunktionen kann vorteilhaft in allen Phasen des Lebenszyklus eine Erstellung, Bearbeitung und Parametrierung der Gerätefunktion erfolgen, wobei gegebenenfalls zunächst nur eine Bearbeitung auf Basis der jeweiligen Stellvertreterfunktion erfolgt.

Ein erfindungsgemäßes Steuerungssystem zur Steuerung eines Automatisierungssystems umfasst wenigstens ein Steuergerät und wenigstens ein Software-Modul, wobei das Steuergerät wie oben beschrieben ein darin gespeichertes erstes Programm-Modul umfasst, welches wenigstens eine ausführbare Gerätefunktion aufweist, und wobei das Software-Modul eine innerhalb einer Ablaufumgebung ausführbare Programm-Funktion umfasst, wobei die Programmfunktion eine Stellvertreterfunktion der in dem Steuergerät hinterlegten Gerätefunktion ist.

Selbstverständlich liegt auch ein Steuerungssystem zur Steuerung eines Automatisierungssystems im Rahmen der Erfindung, welches eine oder mehrere der oben beschriebenen vorteilhaften Ausgestaltungen aufweist.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile.

Es zeigen:
- Fig. 1:: eine schematische Darstellung der prinzipiellen Funktionsweise eines Funktions-Proxys als Erweiterung einer Gerätefunktion,
- Fig. 2:: eine schematische Darstellung eines ersten Ausführungsbeispiels eines erfindungsgemäßen Steuerungssystems,
- Fig. 3:: eine schematische Darstellung eines zweiten bevorzugten Ausführungsbeispiels eines erfindungsgemäßen Steuerungssystems,
- Fig. 4:: schematisch das Abrufen einer Gerätefunktion über einen im Steuergerät hinterlegten Marker,
- Fig. 5:: eine schematische Darstellung eines dritten bevorzugten Ausführungsbeispiels eines erfindungsgemäßen Steuerungssystems,
- Fig. 6:: eine schematische Darstellung eines vierten bevorzugten Ausführungsbeispiels eines erfindungsgemäßen Steuerungssystems, und
- Fig. 7:: eine schematische Darstellung eines fünften bevorzugten Ausführungsbeispiels eines erfindungsgemäßen Steuerungssystems.

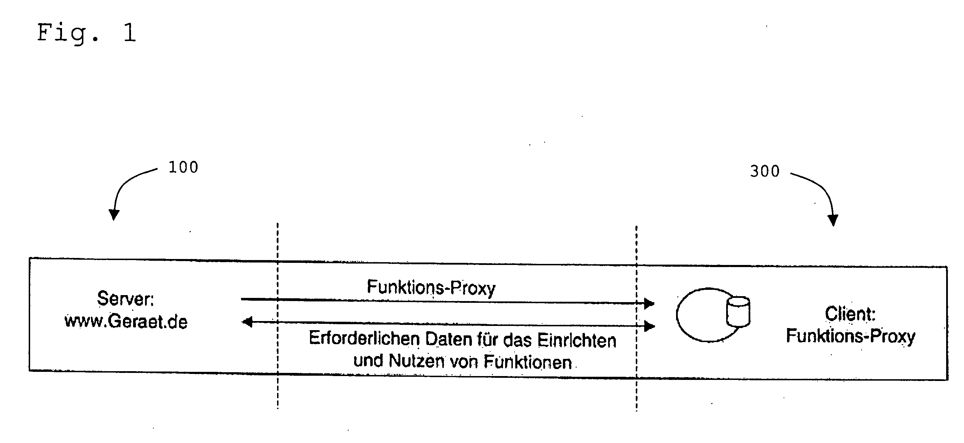

Wie in Fig. 1 dargestellt, wird in einer universellen Laufzeitumgebung, zum Beispiel einem Browser, durch einen Funktions-Proxy die Gerätefunktion eines Steuergerätes 100 ergänzt. Endpunkte der Kommunikation sind das Gerät 100 und der Funktions-Proxy 300. Der Funktions-Proxy ist vorteilhaft als eine auf WEB-Technologie basierende Softwarekomponente ausgebildet, beispielsweise als Rich Internet Application (RIA).

Vorzugsweise werden als Basis für die Kommunikation zwischen Gerät und universeller Laufzeitumgebung WEB-basierte Technologien eingesetzt, die Maschine/Maschine- und Maschine/Mensch-Kommunikation beherrschen bzw. entprechende Mechanismen nutzen, insbesondere Technologien wie zum Beispiel AJAX. Dementsprechend erfolgt die Kommunikation vorzugsweise auf Client/Server-Basis, wobei das Gerät 100 den Server und der Funktions-Proxy den Client bilden.

Mit dem Funktions-Proxy 300 können vorteilhaft Teile der Geräte-Applikation verlagert werden. Auf diese Weise kann zum Beispiel vorteilhaft eine kostengünstige Sensorik vorgesehen werden, bei der das Sensorgerät nur eine geringe Performance aufweist, da die entsprechende Sensorik-Applikation als Funktions-Proxy auf ein anderes Gerät mit größerer Leistung verlagert werden kann.

Der Funktions-Proxy 300 kann aus dem Gerät 100 geladen werden, wie in Fig. 1 dargestellt, oder auch durch den Hersteller oder durch einen Drittanbieter zur Verfügung gestellt werden.

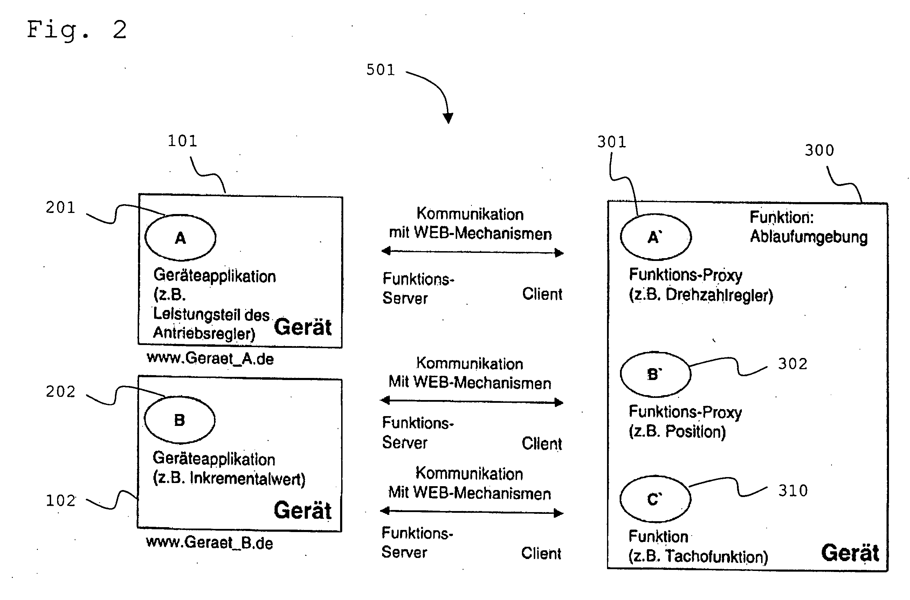

In Fig. 2 ist ein erstes Ausführungsbeispiels eines erfindungsgemäßen Steuerungssystems 501 schematisch dargestellt. Dargestellt sind zwei Geräte 101 und 102 eines Steuerungssystems zur Steuerung eines Automatisierungssystems, wobei das Gerät 101 zur Steuerung eines Antriebsreglers ausgebildet ist und zu diesem Zweck eine Geräteapplikation 201 aufweist, und Gerät 201 zum Registrieren eines Sensorwertes ausgebildet ist und zu diesem Zweck eine entsprechende Geräteapplikation 202 aufweist. In einem Gerät 300, welches typischerweise mit einer Benutzerschnittstelle ausgestattet ist, ist eine Ablaufumgebung, beispielsweise in Form eines Browsers vorgesehen. Innerhalb dieser Ablaufumgebung werden die Funktions-Proxys 301 und 302, sowie die weitere Funktion 310 ausgeführt. Der Funktions-Proxy 301 ist der Geräte-Applikation 201 zugeordnet und erweitert dessen Funktion beispielsweise um einen von einem Benutzer bedienbaren Drehzahlregler. Der Funktions-Proxy 302 ist der Geräte-Applikation 202 zugeordnet und erweitert dessen Funktion beispielsweise um eine Ausgabefunktion zur Ausgabe einer Position. Durch die Funktion 310 wird beispielsweise eine Tachofunktion, basierend auf den von der Geräte-Applikation 202 ermittelten Sensorwerten, bereitgestellt.

Im dargestellten Ausführungsbeispiel wird mittels Web-Mechanismen eine Kommunikation zwischen der Geräte-Applikation 201 und dem zugeordneten Funktions-Proxy 301, sowie zwischen der Geräte-Applikation 202 und deren zugeordnetem Funktions-Proxy 302, aber auch zwischen der Geräte-Applikation 202 und der Funktion 310 ermöglicht. Ferner ist selbstverständlich auch eine Kommunikation zwischen den Funktionen 301, 302 und 310 innerhalb der Ablaufumgebung möglich. Dementsprechend könnte die Funktion 310 auch anstatt mit der Geräte-Applikation 202 nur mit dem zugeordneten Funktions-Proxy 302 kommunizieren.

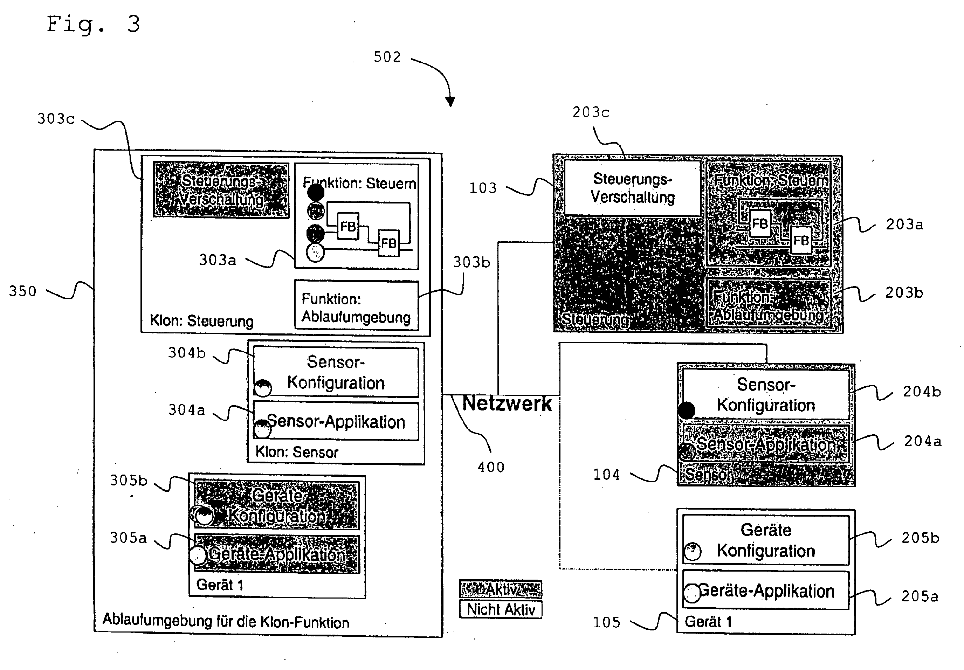

Das erfindungsgemäße Verfahren kann besonders vorteilhaft dazu eingesetzt werden, den funktionalen Ablauf des Steuerungssystems zumindest teilweise innerhalb der Ablaufumgebung zu simulieren. Dies ist beispielhaft in Fig. 3 dargestellt. Bei dem in Fig. 3 dargestellten Ausführungsbeispiel umfasst das Steuerungssystem 502 ein als Steuerung ausgebildetes Gerät 103, sowie einen Sensor 104 und ein weiteres Gerät 105. Die Steuerung 103 umfasst die Steuerfunktionen 203a, 203b und 203c, der Sensor 104 umfasst die Sensor-Applikation 204a sowie eine Applikation 204b zur Speicherung der Sensor-Konfiguration, das Gerät 105 umfasst die Geräte-Applikation 205a sowie eine Applikation 205b zur Speicherung der Geräte-Konfiguration.

Über ein Netzwerk 400 ist die Ablaufumgebung 350 mit den Geräten 103 bis 105 verbunden. Für jede der Applikationen 203a, 203b, 203c, 204a, 204b, 205a und 205b sind in der Ablaufumgebung 350 zugeordnete Funktions-Proxys 303a, 303b, 303c, 304a, 304b, 305a beziehungsweise 305b vorgesehen, die mit den jeweils zugeordneten Geräte-Applikationen zumindest teilweise identisch und dazu ausgebildet sind, die jeweilige Geräte-Appliaktion innerhalb der Ablaufumgebung 350 zu simulieren.

Auf diese Weise lässt sich der gesamte funktionale Ablauf des Steuerungssystems 502 überprüfen, selbst wenn beispielsweise das Gerät 105 physikalisch noch gar nicht zur Verfügung steht. Die Ausführung der entsprechenden Funktionen wird dann von den Funktions-Proxys 305a und 305b übernommen. So kann beim Aufbau eines Steuerungssystems 502 dieses bereits teilweise in Betrieb genommen und geprüft werden, noch bevor es vollständig aufgebaut ist. Es können auch die Funktionen eines der Geräte 103 bis 105 teilweise im Gerät und teilweise innerhalb der Ablaufumgebung mittels der entsprechenden Funktions-Proxys ausgeführt werden, wie dies in Fig. 3 für die Steuerung 103 dargestellt ist. Die jeweils aktiven Funktionen sind in dem in Fig. 3 dargestellten Ausführungsbeispiel jeweils grau hinterlegt.

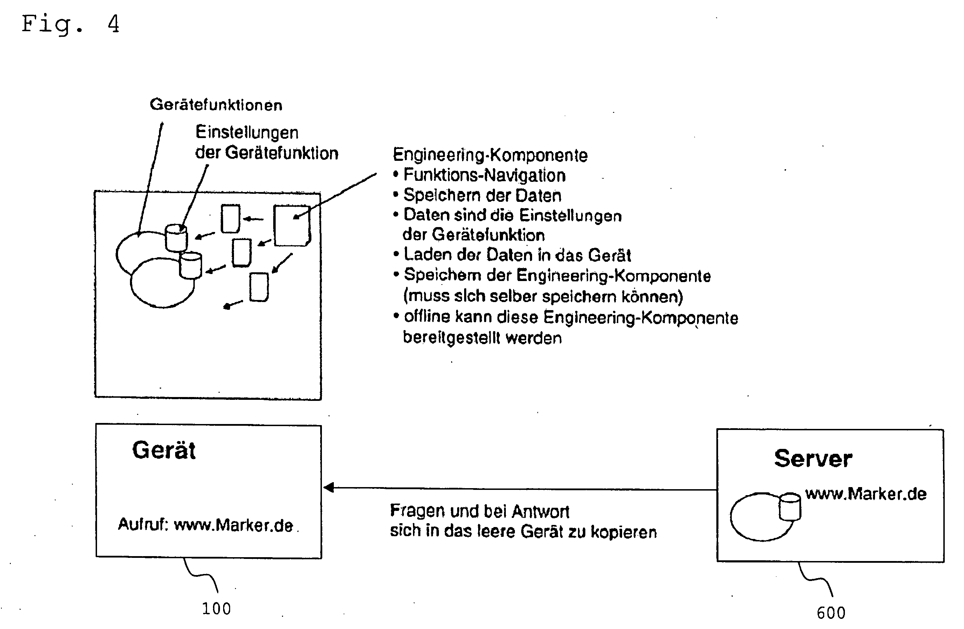

Die Gerätefunktionen und die zugeordneten Funktions-Proxys für ein Gerät können vorteilhaft jeweils bei Bedarf in der aktuellsten Version von einem Server abgerufen und in das jeweilige Gerät kopiert werden. Zu diesem Zweck ist, wie in Fig. 4 dargestellt, in dem Gerät 100 ein Marker, beispielsweise in Form einer Internetadresse, hinterlegt, mittels dessen ein Verbindungsaufbau zu dem Server 600 initiiert wird, von dem das Gerät dann die entsprechenden Funktionen erhält. Die Gerätefunktionen oder die zugeordneten Funktions-Proxys können vorteilhaft auch Engineering-Komponenten, welche den gesamten Lebenszyklus eines Gerätes abdecken, umfassen.

Besonders vorteilhaft an dem erfindungsgemäßen Einsatz von Stellvertreterfunktionen auf Basis WEB-basierter Technologie ist, dass diese auf der Anwender-Ebene keine Information zum unterlagerten Netzwerk, wie beispielsweise Topologieinformation oder Netzwerktreiber, benötigt. Dies ermöglicht die Verwendung bestehender Systeme und Kommunikations-Mechanismen, wie zum Beispiel FDT mit COM-DTM, TCP/IP, OPC (OLE for Process Control), Feldbusse, Ethernet-Netzwerke. Zudem wird die Bereitstellung der notwendigen Informationen über Netzwerk-Proxy-Strukturen ermöglicht. Die Netzwerk-Proxy-Struktur ist in diesem Zusammenhang der "Netzwerk-Stellvertreter" für ein zum Beispiel unterlagertes Netzwerk. Ein Beispiel hierfür ist ein Ethernet/Feldbus-Proxy. Anwenderfunktionen können auch Netzwerkinformationen erhalten. Dieses ist immer dann vorteilhaft, wenn die Kommunikation bzw. die Netzwerkverbindung eine für die Applikation, d.h. für die Applikationsfunktion oder den Applikations-Proxy, bedeutende Rolle spielt. Entsprechende Netzwerkinformationen umfassen beispielsweise Reaktionszeit, Überwachungsfunktion oder Datengüte.

Neuere Systeme sind häufig bereits Ethernet-basiert und damit für Web-Technologien nutzbar und können somit vorteilhaft ohne zusätzliche Hardwareanpassungen für das erfindungsgemäße Verfahren eingesetzt werden. Weiterhin wird die Verwendung von Browsern in B&B-Geräten (Bedienen und Beobachten) sowie Steuerungssystemen und die damit verbundene Bereitstellung von allgemeinen Ablaufumgebungen mehr und mehr gängige Praxis, so dass Geräte mit einer zur Ausführung einer Stellvertreterfunktion geeigneten Ablaufumgebung bereits zur Verfügung stehen.

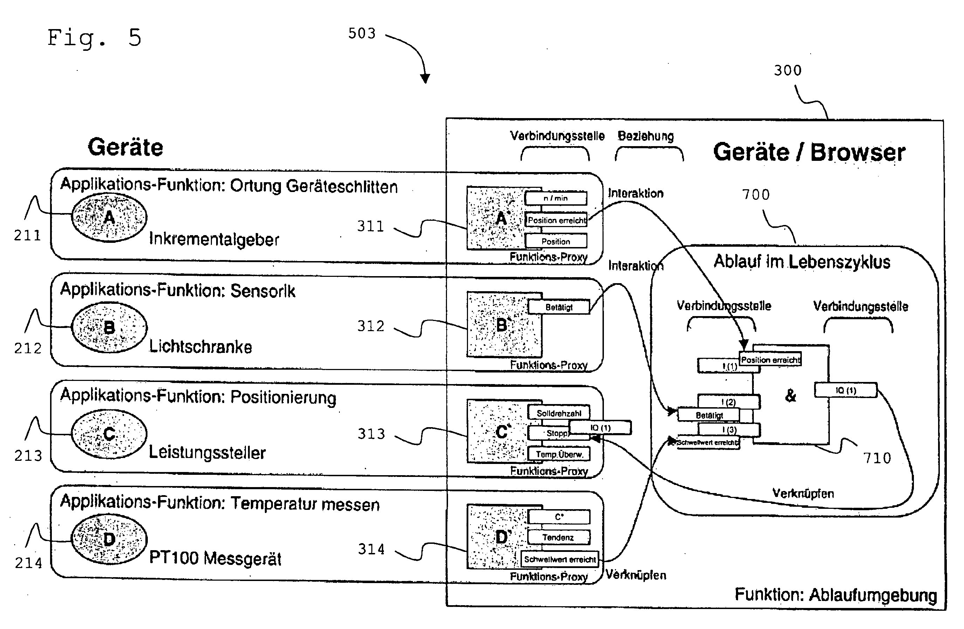

Im Gegensatz beispielsweise zu OPC XML-DA (OLE Process Control XML-Data Access), der die Variablen über Web-Mechanismen präsentiert, umfasst die erfinderische Lösung die Nutzung der Applikations-Funktionen, wie beispielsweise in Fig. 5 dargestellt. Bei dem in Fig. 5 dargestellten Ausführungsbeispiel eines Steuerungssystems 503 sind Geräte-Applikationen 211, 212, 213 und 214 vorgesehen, deren Funktionalitäten durch zugeordnete Funktions-Proxys 311, 312, 313 beziehungsweise 314 jeweils erweitert wird. Die Funktions-Proxys 311 bis 314, die in einer Ablaufumgebung in einem separaten Gerät 300 ablaufen, können besonders vorteilhaft in die Geräte-Konfiguration integriert werden. Ein Funktions-Proxy ist dabei vorzugsweise Server für andere Funktions-Proxys.

Wie in Fig. 5 dargestellt, werden die Funktions-Proxys 311 bis 314 im Engineering-Prozess 700, zum Beispiel im Browser, so konfiguriert, dass sie mit anderen Funktions-Proxys verschaltet werden oder mit diesen zusammen arbeiten können. Die Verschaltung dieser Beziehung geschieht durch das Verknüpfen einer Verbindungsstelle mit einer anderen Verbindungsstelle und Definition der Interaktion. Dies kann im Browser beispielsweise mittels "Drag and Drop" durch den Benutzer erfolgen. Die Verknüpfung ist eine Interaktion zwischen Funktions-Proxys und des Ablaufes im Lebenszyklus und stellt somit eine Applikationsbeschreibung dar.

Auf diese Weise können auch "Nicht Geräte-Hersteller" Automatisierungs-Funktionen anbieten, welche wie ein Funktions-Proxy, jedoch ohne dazugehörendes Gerät wirken. Im einfachsten Fall handelt es sich hierbei um Grundfunktionen wie UND oder ODER, wie die in Fig. 5 dargestellte UND-Funktion 710. Weiterhin sind diese auch als komplette Applikations-Funktionen, umfassend zum Beispiel Regel-Funktionen, Teilapplikationen, Mechatronik oder Bedienfunktionen, mit hoher Funktionalität nutzbar. Diese sind als Automatisierungs-Funktionen mit anderen Funktions-Proxys und weiteren Automatisierungs-Funktionen verschaltbar.

Automatisierungs-Funktionen und Funktions-Proxys können neben der reinen WEB-basierten Technologie auch proprietäre Technologien enthalten, die über die WEB-basierte Technologie genutzt oder aufgerufen werden. Beispielhaft ist die Integration der Sicherheitstechnik zu nennen, die funktional einen sicheren Kern bildet und über WEB-basierte Technologie die Verbindung zu weiteren Automatisierungs-Funktionen oder Funktions-Proxys, welche sicher oder nicht sicher ausgebildet sein können, hält.

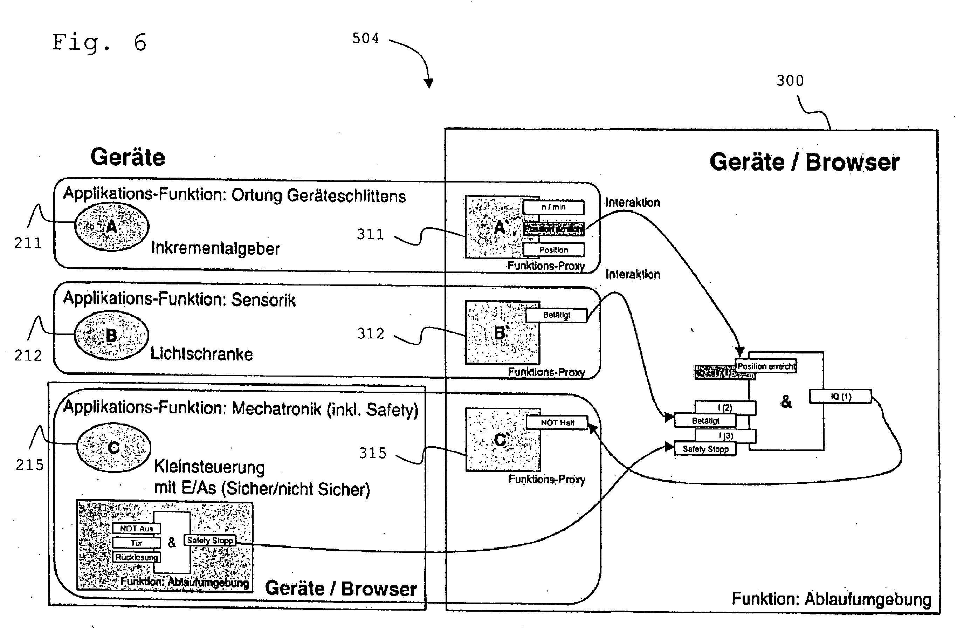

Dies ist beispielhaft bei dem in Fig. 6 dargestellten Steuerungssystem 504 gezeigt, das gegenüber dem in Fig. 5 dargestellten Steuerungssystem 503 dahingehend abgewandelt ist, dass ein sicherheitsgerichtetes Gerät mit einer entsprechenden sicherheitsgerichetetn Geräteapplikation 215 und einem zugeordneten Funktions-Proxy 315 vorgesehen ist.

Besonders vorteilhaft sind alle Funktionen online, d.h. mit dem System und Geräten verbunden, offline, d.h. als Applikation auf einem oder mehreren Browsern in einem erreichbaren Web-Server oder Betriebssystem, oder in Kombination, d.h. teilweise online und teilweise offline ausführbar.

Mit dem beschriebenen Verfahren ist eine einfache Progammier- und Ablaufumgebung im Standard-Browser möglich. Weiterhin werden Steuerungs- und E/A-Komponenten einfacher nutzbar und Geräte-, System- und Kunden-Applikationen kostengünstiger realisierbar.

Mit der Standard Web Technologie können Applikationen unabhängig vom Netzwerk betrieben werden. Die Verwendung dieser Technologie setzt lediglich die Verfügbarkeit von Web-Infrastrukturmechanismen voraus.

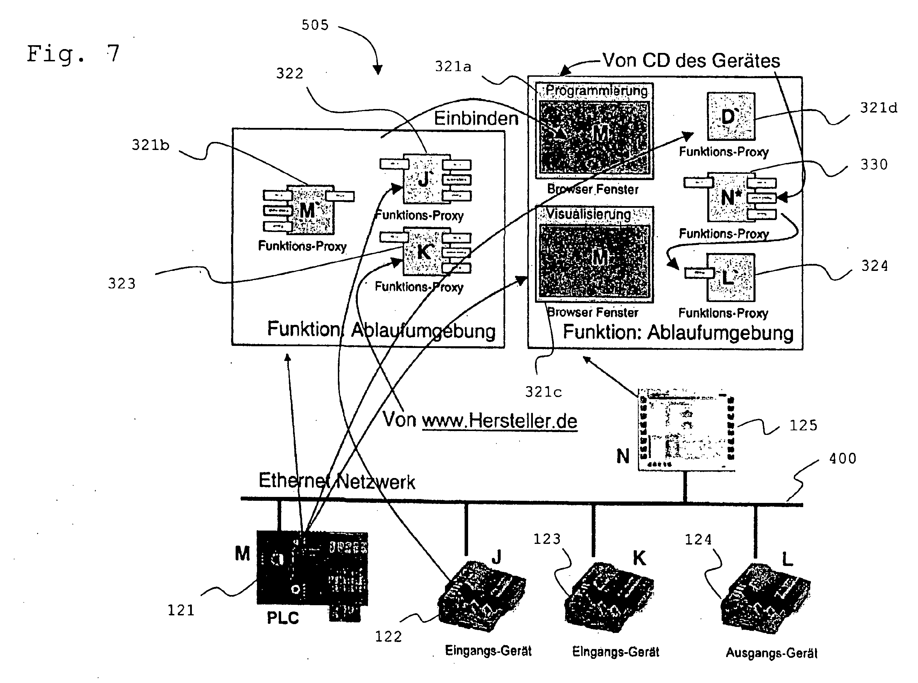

Besonders vorteilhaft können die einzelnen SoftwareKomponenten, welche die Gerätefunktionen und/oder die Funktions-Proxys umfassen, flexibel und auf unterschiedliche Weis ebereitgestellt werden. Dazu wird im Folgenden auf das in Fig. 7 dargestellte Ausführungsbeispiel Bezug genommen.

Ein Automatisierungs-System 505, bestehend aus einer Steuerung 121 (M), zwei Eingangs-Geräten 122 (J) und 123 (K), einem Ausgangs-Gerät 124 (L) und einem B&B-Gerät 125 (N) wird automatisiert. Nachdem der Kunde das Netzwerk 400 mit den Geräten verbunden hat, kann er sich über seinen WEB-Browser des B&B-Gerätes 125 seine Applikation zusammenstellen. Je nach Quelle erhält er die Applikations-Funktionen und Funktions-Proxys aus dem jeweiligen Gerät, aus dem Internet oder per Datei, beispielsweise von einer dem jeweiligen Gerät beiliegenden CD.

Der Funktions-Proxy 321a der PLC Programmierung 121 bindet die Funktions-Proxys 322 und 323 der Geräte und den Funktions-Proxy 321b der PLC 121 mit ein. An dieser Stelle projektiert und programmiert der Kunde die Applikation. Die Visualisierung 321c (M) ist die Standard-Visualisierung der PLC 121, zum Beispiel in Form einer HTML-Seite, die mit heutigen Mechanismen erstellt werden kann.

Spezifische Funktionen der PLC 121 und des Ausgangs-Gerätes 124 werden jeweils über einen Funktions-Proxy 321d bzw. 324 ausgeführt. Für die PLC 121 ist es in diesem Beispiel die Mechatronik-Funktion 321d (D'). Das Eingangs-Modul 122 (J) verlagert die Normierung des Eingangssignals auf die PLC (J') wobei der Funktions-Proxy 322 durch das Modul 122 bereitgestellt wird. Das Eingangsmodul 123 (K) stellt in der Applikation ein Nockenschaltwerk zur Verfügung. Den entsprechenden Funktions-Proxy 323 (K') erhält der Kunde über das Internet von seinem System-Integrator. Das Ausgangsmodul 124 besitzt Ausgänge, die anhand der Vorauswahl des Nockenschaltwerkes, der Eingangsinformation des Eingangs-Moduls 122 (J) und der PLC Funktion einen Werkzeugschlitten bedienen. Der Funktions-Proxy "Werkzeugschlitten" 330 (N*) wird durch den Maschinenbauer geschrieben und dem Kunden über eine CD verfügbar gemacht.

## Patentansprüche

1. Verfahren zur Steuerung eines Automatisierungssystems, wobei zur Steuerung ein Steuerungssystem (501-505) mit über ein Netzwerk (400) miteinander verbundenen Steuergeräten (101-105, 121-125) eingesetzt wird, die vorgegebene Gerätefunktionen (201-205b, 211-215) aufweisen, wobei in wenigstens einem Steuergerät (101-105, 121-125) ein Steuerprogramm mit einer vorgegebenen Gerätefunktion (201-205b, 211-215) gespeichert ist, die wenigstens einen ersten variablen Funktionsparameter hat, umfassend die Schritte:
- Bereitstellen wenigstens eines Software-Moduls innerhalb einer Ablaufumgebung (350) mit einer innerhalb der Ablaufumgebung (350) ausführbaren Programmfunktion (301-305b, 311-315, 321a-324), wobei
- die Programmfunktion (301-305b, 311-315, 321) eine Stellvertreterfunktion der in dem Steuergerät (101-105, 121-125) hinterlegten Gerätefunktion (201-205b, 211-215) ist, zumindest teilweise zur Gerätefunktion identisch ist, und wenigstens einen zweiten, dem ersten Funktionsparameter der Gerätefunktion zugeordneten, variablen Funktionsparameter umfasst,
- Anpassen des zweiten Funktionsparameters der Programmfunktion in Abhängigkeit von Benutzereingaben, wobei die Benutzereingaben durch eine Benutzerschnittstelle der Ablaufumgebung (350) bereitgestellt werden,
- Übertragen des angepassten zweiten Funktionsparameters von der Ablaufumgebung (350) zu dem wenigstens einen Steuergerät (101-105, 121-125) über das Netzwerk (400),
- Einstellen des ersten Funktionsparameters auf den Wert des zweiten Funktionsparameters, und wobei
das Verfahren **dadurch gekennzeichnet ist, dass**
die Stellvertreterfunktion der Gerätefunktion zugeordnet wird, wobei die Gerätefunktion durch die Stellvertreterfunktion erweitert wird oder Teile der Gerätefunktion zur Stellvertreterfunktion verlagert werden, derart, dass die Gerätefunktion teilweise in dem Gerät und teilweise innerhalb der Ablaufumgebung mittels der Stellvertreterfunktion ausgeführt wird, so dass die Gerätefunktion durch die Stellvertreterfunktion ergänzt wird.

2. Verfahren nach Anspruch 1, ferner umfassend die Schritte
- Übertragen des ersten Funktionsparameters von dem wenigstens einen Steuergerät (101-105, 121-125) zu der Ablaufumgebung (350) über das Netzwerk (400),
- Einstellen des zweiten Funktionsparameters auf den Wert des ersten Funktionsparameters.

3. Verfahren nach einem der vorstehenden Ansprüche, wobei das Netzwerk (400) ein IP-basiertes Netzwerk, insbesondere das Internet, ist, die Ablaufumgebung (350) einen Web-Browser umfasst, und das Übertragen des ersten und/oder zweiten Funktionsparameters mittels Standard-Webtechnologien, insbesondere mittels AJAX erfolgt.

4. Verfahren nach einem der vorstehenden Ansprüche, umfassend den Schritt
- Simulieren eines funktionalen Ablaufes des Steuerungssystems (501-505) innerhalb der Ablaufumgebung (350).

5. Verfahren nach Anspruch 4, wobei das Simulieren eines funktionalen Ablaufes das Ausführen wenigstens einer Programmfunktion (301-305b, 311-315, 321a-324) umfasst, wobei die Programmfunktion eine Stellvertreterfunktion einer in einem Steuergerät des Steuerungssystems hinterlegten Gerätefunktion (201-205b, 211-215) ist.

6. Verfahren nach Anspruch 4 oder 5, wobei das Simulieren eines funktionalen Ablaufes das Austauschen von Daten zwischen wenigstens zwei Programmfunktionen (301-305b, 311-315, 321a-324) umfasst, wobei die Programmfunktionen jeweils Stellvertreterfunktionen von in wenigstens zwei zugeordneten Steuergeräten (101-105, 121-125) hinterlegten Gerätefunktionen (201-205b, 211-215) sind.

7. Verfahren nach einem der Ansprüche 4 bis 6, wobei das Simulieren eines funktionalen Ablaufes das Ausführen wenigstens einer in einem Steuergerät (101-105, 121-125) des Steuerungssystems (501-505) hinterlegten Gerätefunktion (201-205b, 211-215) umfasst, wobei
- Eingabewerte der Gerätefunktion von der Ablaufumgebung (350) zu dem Steuergerät über das Netzwerk (400) übertragen werden, und
- Ausgabewerte der Gerätefunktion von dem Steuergerät zu der Ablaufumgebung (350) über das Netzwerk (400) übertragen werden.

8. Verfahren nach einem der vorstehenden Ansprüche, wobei das Bereitstellen des wenigstens einen Software-Moduls innerhalb der Ablaufumgebung (350)
- das Auslesen der Stellvertreterfunktion aus dem Steuergerät,
- das Abrufen der Stellvertreterfunktion von einer vorgegebenen Internetadresse des Herstellers des Steuergerätes,
- das Abrufen der Stellvertreterfunktion von einer im Steuergerät hinterlegten Internetadresse,
- das Bereitstellen eines Speichermediums mit einer darauf gespeicherten, die Stellvertreterfunktion umfassenden Softwarekomponente, oder
- das Bereitstellen der Stellvertreterfunktion als Ergebnis eines Konfigurationsprozesses umfasst.

9. Steuergerät (101-105, 121-125) eines Steuerungssystems (501-505) zur Steuerung eines Automatisierungssystems, umfassend,
- einen Speicher mit einem darin gespeicherten ersten Programm-Modul, wobei das erste Programm-Modul wenigstens eine ausführbare Gerätefunktion (201-205b, 211-215) mit wenigstens einem ersten variablen Funktionsparameter umfasst,
- eine Prozessor-Einheit zur Ausführung des ersten Programm-Moduls, und
- eine Netzwerk-Schnittstelle zum Verbinden des Steuergerätes (101-105, 121-125) mit einem Netzwerk (400), wobei
- das erste Programm-Modul dazu ausgebildet ist, über eine Software-Schnittstelle mit wenigstens einem zweiten Programm-Modul zu kommunizieren,
- das zweite Programm-Modul in einem mit dem Steuergerät (101-105, 121-125) über das Netzwerk (400) verbindbaren Rechnersystem (300) angeordnet ist und wenigstens eine Programmfunktion (301-305b, 311-315, 321a-324) mit wenigstens einem zweiten variablen Funktionsparameter umfasst, und
- die Programmfunktion (301-305b, 311-315, 321a-324) eine Stellvertreterfunktion der in dem Steuergerät (101-105, 121-125) hinterlegten Gerätefunktion (201-205b, 211-215) ist, wobei die Gerätefunktion und die Programmfunktion zumindest teilweise identisch sind,
**dadurch gekennzeichnet, dass** die Stellvertreterfunktion der Gerätefunktion zugeordnet ist, wobei die Gerätefunktion durch die Stellvertreterfunktion erweitert ist oder Teile der Gerätefunktion zur Stellvertreterfunktion verlagert sind, derart, dass die Gerätefunktion teilweise in dem Gerät und teilweise innerhalb der Ablaufumgebung mittels der Stellvertreterfunktion ausgeführt wird, so dass die Gerätefunktion durch die Stellvertreterfunktion ergänzt wird.

10. Steuergerät nach Anspruch 9, dazu ausgebildet, den ersten variablen Funktionsparameter auf einen über das Netzwerk (400) empfangenen Wert einzustellen.

11. Steuergerät nach einem der vorstehenden Ansprüche 9 bis 10, dazu ausgebildet, den ersten variablen Funktionsparameter aus der Gerätefunktion (201-205b, 211-215) auszulesen und über das Netzwerk (400) an das zweite Programm-Modul zu übertragen.

12. Steuergerät nach einem der vorstehenden Ansprüche 9 bis 11, dazu ausgebildet, die Gerätefunktion (201-205b, 211-215) derart auszuführen, dass Ein- und Ausgabewerte der Gerätefunktion (201-205b, 211-215) über das Netzwerk (400) mit dem zweiten Programm-Modul ausgetauscht werden.

13. Steuergerät nach einem der vorstehenden Ansprüche 9 bis 12, wobei das Steuergerät (101, 102, 104, 122-124) ein Eingangs- oder Ausgangsgerät zur Prozesssteuerung ist.

14. Steuergerät nach einem der vorstehenden Ansprüche 9 bis 13, wobei das Steuergerät (105, 121) eine programmierbare logische Kontrolleinheit (PLC) ist.

15. Steuerungssystem (501-505) zur Steuerung eines Automatisierungssystems, umfassend
- wenigstens ein Steuergerät (101-105, 121-125) nach einem der Ansprüche 9 bis 14 mit einem darin gespeicherten ersten Programm-Modul, welches wenigstens eine ausführbare Gerätefunktion (201-205b, 211-215) umfasst, und
- wenigstens ein Software-Modul mit einer innerhalb einer Ablaufumgebung (350) ausführbaren Programm-Funktion (301-305b, 311-315, 321a-324), wobei die Programmfunktion eine Stellvertreterfunktion der in dem Steuergerät hinterlegten Gerätefunktion ist.

## Claims

1. Method for the control of an automation system, wherein for the control, a control system (501-505) with control devices (101-105, 121-125) connected together via a network (400) is used, the control devices having predetermined device functions (201-205b, 211-215), wherein, in at least one control device (101-105, 121-125), a control program with a predetermined device function (201-205b, 211-215) is stored, which device function has at least one first variable function parameter, comprising the steps of:
- providing at least one software module within an execution environment (350) with a program function (301-305b, 311-315, 321a-324) which is executable within the execution environment (350), wherein
- the program function (301-305b, 311-315, 321) is a representative function of the device function (201-205b, 211-215) which is stored in the control device (101-105, 121-125), is at least partially identical to the device function, and comprises at least one second variable function parameter which is associated with the first function parameter of the device function,
- adapting the second function parameter of the program function in dependence upon user inputs, wherein the user inputs are provided by a user interface of the execution environment (350),
- transmitting the adapted second function parameter from the execution environment (350) to the at least one control device (101-105, 121-125) via the network (400),
- setting the first function parameter to the value of the second function parameter, and wherein
the method is **characterised in that**
the representative function is associated with the device function, wherein the device function is expanded by the representative function or parts of the device function are relocated to the representative function such that the device function is executed partly in the device and partly within the execution environment by means of the representative function so that the device function is supplemented by the representative function.

2. Method as claimed in claim 1, further comprising the steps of:
- transmitting the first function parameter from the at least one control device (101-105, 121-125) to the execution environment (350) via the network (400),
- setting the second function parameter to the value of the first function parameter.

3. Method as claimed in any one of the preceding claims, wherein the network (400) is an IP-based network, in particular the Internet, the execution environment (350) comprises a Web browser, and the transmission of the first and/or second function parameter occurs by means of standard Web technologies, in particular by means of AJAX.

4. Method as claimed in any one of the preceding claims, further comprising the step of:
- simulating a functional procedure of the control system (501-505) within the execution environment (350).

5. Method as claimed in claim 4, wherein the simulation of a functional procedure comprises executing at least one program function (301-305b, 311-315, 321a-324), wherein the program function is a representative function of a device function (201-205b, 211-215) which is stored in a control device of the control system.

6. Method as claimed in claim 4 or 5, wherein the simulation of a functional procedure comprises exchanging data between at least two program functions (301-305b, 311-315, 321a-324), wherein the program functions in each case are representative functions of device functions (201-205b, 211-215) which are stored in at least two associated control devices (101-105, 121-125).

7. Method as claimed in any one of claims 4 to 6, wherein the simulation of a functional procedure comprises executing at least one device function (201-205b, 211-215) which is stored in a control device (101-105, 121-125) of the control system (501-505), wherein
- input values of the device function are transferred from the execution environment (350) to the control device via the network (400), and
- output values of the device function are transferred from the control device to the execution environment (350) via the network (400).

8. Method as claimed in any one of the preceding claims, wherein the providing of the at least one software module within the execution environment (350) comprises
- reading out the representative function from the control device,
- retrieving the representative function from a predetermined Internet address of the manufacturer of the control device,
- retrieving the representative function from an Internet address stored in the control device,
- providing a storage medium with a software component stored thereon which comprises the representative function, or
- providing the representative function as a result of a configuration process.

9. Control device (101-105, 121-125) of a control system (501-505) for the control of an automation system, comprising:
- a memory with a first program module stored therein, wherein the first program module comprises at least one executable device function (201-205b, 211-215) with at least one first variable function parameter,
- a processor unit for the execution of the first program module, and
- a network interface for the connection of the control device (101-105, 121-125) to a network (400), wherein
- the first program module is designed to communicate via a software interface with at least one second program module,
- the second program module is arranged in a computer system (300) which can be connected to the control device (101-105, 121-125) via the network (400) and which comprises at least one program function (301-305b, 311-315, 321a-324) with at least one second variable function parameter, and
- the program function (301-305b, 311-315, 321a-324) is a representative function of the device function (201-205b, 211-215) which is stored in the control device (101-105, 121-125), wherein the device function and the program function are at least partially identical,
**characterised in that** the representative function is associated with the device function, wherein the device function is expanded by the representative function or
parts of the device function are relocated to the representative function such that the device function is executed partly in the device and partly within the execution environment by means of the representative function so that the device function is supplemented by the representative function.

10. Control device as claimed in claim 9, designed to set the first variable function parameter at a value received via the network (400).

11. Control device as claimed in any one of the preceding claims 9 to 10, designed to readout the first variable function parameter from the device function (201-205b, 211-215), and transfer same via the network (400) to the second program module.

12. Control device as claimed in any one of the preceding claims 9 to 11, designed to execute the device function (201-205b, 211-215) in such a way that input and output values of the device function (201-205b, 211-215) are exchanged via the network (400) with the second program module.

13. Control device as claimed in any one of the preceding claims 9 to 12, wherein the control device (101, 102, 104, 122-124) is an input or output device for process control.

14. Control device as claimed in any one of the preceding claims 9 to 13, wherein the control device (105, 121) is a programmable logic controller (PLC).

15. Control system (501-505) for the control of an automation system, comprising
- at least one control device (101-105, 121-125) as claimed in any one of claims 9 to 14 with a first program module stored therein, which module comprises an executable device function (201-205b, 211-215), and
- at least one software module with a program function (301-305b, 311-315, 321 a-324) which can be executed within an execution environment (350), wherein the program function is a representative function of the device function stored in the control device.

## Revendications

1. Procédé pour commander un système d'automatisation, la commande étant assurée par un système de commande (501-505) comportant des appareils de commande (101-105, 121-125), qui sont reliés à un réseau (400) et comportent des fonctions d'appareil (201-205b, 211-215) prédéfinies, un programme de commande avec une fonction d'appareil (201-205b, 211-215) prédéfinie, qui possède au moins un premier paramètre fonctionnel variable, étant stocké dans au moins un appareil de commande (101-105, 121-125), ledit procédé comportant les étapes de :
- mise à disposition d'au moins un module logiciel à l'intérieur d'un environnement d'exécution (350) avec une fonction de programme (301-305b, 311-315, 321a-324) pouvant être exécutée à l'intérieur de l'environnement d'exécution (350),
- la fonction de programme (301-305b, 311-315, 321) étant une fonction de suppléant de la fonction d'appareil (201-205b, 211-215) stockée dans l'appareil de commande (101-105, 121-125), étant au moins en partie identique à la fonction d'appareil et comportant au moins un deuxième paramètre fonctionnel variable associé au premier paramètre fonctionnel de la fonction d'appareil,
- adaptation du deuxième paramètre fonctionnel de la fonction de programme en fonction des entrées de l'utilisateur, les entrées de l'utilisateur étant mises à disposition par une interface utilisateur de l'environnement d'exécution (350),
- transmission du deuxième paramètre fonctionnel adapté depuis l'environnement d'exécution (350) vers ledit au moins un appareil de commande (101-105, 121-125) via le réseau (400),
- réglage du premier paramètre fonctionnel à la valeur du deuxième paramètre fonctionnel, et
le procédé étant **caractérisé en ce que** :
la fonction de suppléant est affectée à la fonction d'appareil, la fonction d'appareil étant étendue par la fonction de suppléant ou des parties de la fonction d'appareil étant transférées vers la fonction de suppléant, de telle sorte que la fonction d'appareil est exécutée en partie dans l'appareil et en partie à l'intérieur de l'environnement d'exécution au moyen de la fonction de suppléant, de telle sorte que la fonction d'appareil est complétée par la fonction de suppléant.

2. Procédé selon la revendication 1, comportant également les étapes de :
- transmission du premier paramètre fonctionnel depuis ledit au moins un appareil de commande (101-105, 121-125) vers l'environnement d'exécution (350) via le réseau (400),
- réglage du deuxième paramètre fonctionnel à la valeur du premier paramètre fonctionnel.

3. Procédé selon l'une quelconque des revendications précédentes, dans lequel le réseau (400) est un réseau à base IP, en particulier l'Internet, l'environnement d'exécution (350) est un navigateur web, et le premier et/ou le deuxième paramètre fonctionnel sont transmis au moyen de technologies Web standard, en particulier au moyen d'AJAX.

4. Procédé selon l'une quelconque des revendications précédentes, comportant l'étape de :
- simulation d'un déroulement fonctionnel du système de commande (501-505) à l'intérieur de l'environnement d'exécution (350).

5. Procédé selon la revendication 4, dans lequel la simulation d'un déroulement fonctionnel comporte l'exécution d'au moins une fonction de programme (301-305b, 311-315, 321a-324), la fonction de programme étant une fonction de suppléant d'une fonction d'appareil (201-205b, 211-215) stockée dans un appareil de commande du système de commande.

6. Procédé selon la revendication 4 ou 5, dans lequel la simulation d'un déroulement fonctionnel comporte l'échange de données entre au moins deux fonctions de programme (301-305b, 311-315, 321a-324), les fonctions de programme étant chacune des fonctions de suppléant de fonctions d'appareil (201-205b, 211-215) stockées dans au moins deux appareils de commande (101-105, 121-125) correspondants.

7. Procédé selon l'une quelconque des revendications 4 à 6, dans lequel la simulation d'un déroulement fonctionnel comporte l'exécution d'au moins une fonction d'appareil (201-205b, 211-215) stockée dans un appareil de commande (101-105, 121-125) du système de commande (501-505),
- les valeurs d'entrée de la fonction d'appareil étant transmises depuis l'environnement d'exécution (350) vers l'appareil de commande via le réseau (400), et
- les valeurs de sortie de la fonction d'appareil étant transmises depuis l'appareil de commande vers l'environnement d'exécution (350) via le réseau (400).

8. Procédé selon l'une quelconque des revendications précédentes, dans lequel la mise à disposition dudit au moins un module logiciel à l'intérieur de l'environnement d'exécution (350) comporte :
- la lecture de la fonction de suppléant à partir de l'appareil de commande,
- la recherche de la fonction de suppléant depuis une adresse Internet prédéfinie du fabricant de l'appareil de commande,
- la recherche de la fonction de suppléant depuis une adresse Internet stockée dans l'appareil de commande,
- la mise à disposition d'un support de mémoire avec une composante logicielle stockée dans celui-ci et contenant la fonction de suppléant, ou
- la mise à disposition de la fonction de suppléant en tant que résultat d'un processus de configuration.

9. Appareil de commande (101-105, 121-125) d'un système de commande (501-505) permettant de commander un système d'automatisation, comportant :
- une mémoire avec un premier module de programme stocké dans celle-ci, ledit premier module de programme comportant au moins une fonction d'appareil (201-205b, 211-215) exécutable avec au moins un premier paramètre fonctionnel variable,
- un processeur destiné à l'exécution du premier module de programme, et
- une interface réseau destinée à relier l'appareil de commande (101-105, 121-125) à un réseau (400),
- le premier module de programme étant configuré pour communiquer avec au moins un deuxième module de programme via une interface logicielle,
- le deuxième module de programme étant disposé dans un système d'ordinateur (300), pouvant être relié à l'appareil de commande (101-105, 121-125) via le réseau (400), et comportant au moins une fonction de programme (301-305b, 311-315, 321a-324) avec un deuxième paramètre fonctionnel variable, et
- la fonction de programme (301-305b, 311-315, 321a-324) étant une fonction de suppléant de la fonction d'appareil (201-205b, 211-215) stockée dans l'appareil de commande (101-105, 121-125), ladite fonction d'appareil et la fonction de programme étant au moins en partie identiques,
**caractérisé en ce que** la fonction de suppléant est affectée à la fonction d'appareil, la fonction d'appareil étant étendue par la fonction de suppléant ou des parties de la fonction d'appareil étant transférées vers la fonction de suppléant, de telle sorte que la fonction d'appareil est exécutée en partie dans l'appareil et en partie à l'intérieur de l'environnement d'exécution au moyen de la fonction de suppléant, de telle sorte que la fonction d'appareil est complétée par la fonction de suppléant.

10. Appareil de commande selon la revendication 9, configuré pour régler le premier paramètre fonctionnel variable à la valeur reçue via le réseau (400).

11. Appareil de commande selon l'une quelconque des revendications 9 et 10, configuré pour lire le premier paramètre fonctionnel variable à partir de la fonction d'appareil (201-205b, 211-215) et le transmettre au deuxième module de programme via le réseau (400).

12. Appareil de commande selon l'une quelconque des revendications 9 à 11, configuré pour exécuter la fonction d'appareil (201-205b, 211-215) de telle sorte que des valeurs d'entrée et des valeurs de sortie de la fonction d'appareil (201-205b, 211-215) sont échangées avec le deuxième module de programme via le réseau (400).

13. Appareil de commande selon l'une quelconque des revendications précédentes 9 à 12, l'appareil de commande (101, 102, 104, 122-124) étant un dispositif d'entrée ou de sortie pour la commande du processus.

14. Appareil de commande selon l'une quelconque des revendications précédentes 9 à 13, l'appareil de commande (105, 121) étant un contrôleur logique programmable (PLC).

15. Système de commande (501-505) permettant de commander un système d'automatisation, comprenant :
- au moins un appareil de commande (101-105, 121-125) selon l'une quelconque des revendications 9 à 14, comportant un premier module de programme, qui est stocké dans celui-ci et qui comporte une fonction d'appareil (201-205b, 211-215) exécutable, et
- au moins un module logiciel avec une fonction de programme (301-305b, 311-315, 321a-324) exécutable à l'intérieur d'un environnement d'exécution (350), la fonction de programme étant une fonction de suppléant de la fonction d'appareil stockée dans l'appareil de commande.
